(19) Europäisches Patentamt
European Patent Office
Office européen des brevets

(11) **EP 4 428 965 A1**

(12) # EUROPEAN PATENT APPLICATION
published in accordance with Art. 153(4) EPC

(43) Date of publication:
**11.09.2024 Bulletin 2024/37**

(21) Application number: **22899037.0**

(22) Date of filing: **23.11.2022**

(51) International Patent Classification (IPC):
*H01M 8/1051* (2016.01)   *H01M 4/86* (2006.01)
*H01M 8/1004* (2016.01)   *H01M 8/10* (2016.01)

(52) Cooperative Patent Classification (CPC):
**H01M 4/86; H01M 8/10; H01M 8/1004;
H01M 8/1051; Y02E 60/50**

(86) International application number:
**PCT/KR2022/018634**

(87) International publication number:
**WO 2023/096355 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2021 KR 20210167446**

(71) Applicant: **Kolon Industries, Inc.
Seoul 07793 (KR)**

(72) Inventors:
• **KIM, Jung Ho
Seoul 07793 (KR)**
• **KIM, Jun Young
Seoul 07793 (KR)**

• **SONG, Kah Young
Seoul 07793 (KR)**
• **KONG, Nak Won
Seoul 07793 (KR)**
• **LEE, Eun Su
Seoul 07793 (KR)**
• **KIM, Hyeong Su
Seoul 07793 (KR)**
• **LEE, Ju Sung
Seoul 07793 (KR)**
• **NAM, Kyoung Sik
Seoul 07793 (KR)**
• **PARK, Chan Mi
Seoul 07793 (KR)**

(74) Representative: **Ter Meer Steinmeister & Partner
Patentanwälte mbB
Nymphenburger Straße 4
80335 München (DE)**

(54) **MULTIFUNCTIONAL RADICAL SCAVENGER, POLYMER ELECTROLYTE MEMBRANE
INCLUDING SAME, CATALYST LAYER, MEMBRANE-ELECTRODE ASSEMBLY, AND FUEL
CELL**

(57)    Provided is a multifunctional radical scavenger
having improved durability and a heat dissipation func-
tion. The multifunctional radical scavenger according to
the present invention includes a first radical scavenger
and a functional nanosheet layer coated on the surface
of the first radical scavenger, wherein the functional nanosheet layer comprises at least two layers including
functional nanosheets.

**FIG.3**

**Description**

**[TECHNICAL FIELD]**

The present disclosure relates to a multifunctional radical scavenger having a multifunctional composite protective film, a polymer electrolyte membrane including the same, a catalyst layer, a membrane-electrode assembly, and a fuel cell, and more specifically, to a multifunctional radical scavenger having improved durability and a heat dissipation function, a polymer electrolyte membrane including the same, a catalyst layer, a membrane-electrode assembly, and a fuel cell.

**[BACKGROUND ART]**

A polymer electrolyte membrane fuel cell (PEMFC), which generates electricity using a stacked structure of unit cells consisting of a membrane-electrode assembly (MEA) and a separator, has been attracting attention as a next-generation energy source that can replace fossil energy due to its high energy efficiency and environment-friendly features.

A membrane-electrode assembly generally includes an oxidizing electrode (or an anode electrode), a reducing electrode (or a cathode electrode), and a polymer electrolyte membrane interposed between them.

When a fuel such as hydrogen gas is supplied to the oxidizing electrode, hydrogen ions ($H^+$) and electrons ($e^-$) are generated by the oxidation reaction of the hydrogen at the oxidizing electrode. The hydrogen ions generated are transferred to the reducing electrode through the polymer electrolyte membrane, and the electrons generated are transferred to the reducing electrode through an external circuit. At the cathode to which air containing oxygen is supplied, a reduction reaction of the oxygen occurs. That is, oxygen combines with hydrogen ions and electrons to produce water.

In particular, the polymer electrolyte membrane has a significant influence on the performance and lifetime of a polymer electrolyte membrane fuel cell. Therefore, it is very important to improve the performance and lifetime of a fuel cell to prevent degradation of the polymer electrolyte membrane caused by the operation of the fuel cell.

Oxygen radicals generated when the fuel cell operates is known to be a major cause of deterioration of the polymer electrolyte membrane. For example, during the reduction reaction of oxygen at the reducing electrode, hydrogen peroxide ($H_2O_2$) is generated, and from this hydrogen peroxide, a hydrogen peroxide radical ($H_2O_2$) and/or a hydroxyl radical ($\cdot OH$) can be generated. In addition, when the oxygen in the air being supplied to the reducing electrode passes through the polymer electrolyte membrane and reaches the oxidizing electrode, hydrogen peroxide is also generated at the oxidizing electrode, resulting in hydrogen peroxide radicals and/or hydroxyl radicals. These oxygen radicals cause deterioration of the ion conductor included in the polymer electrolyte membrane, thereby lowering the ion conductivity of the polymer electrolyte membrane.

In order to prevent deterioration of the ion conductor due to oxygen radicals, introduction of a radical scavenger capable of removing oxygen radicals has been proposed. However, the radical scavenger dispersed in the electrolyte membrane or electrode slurry in the form of particles has a limitation in that it exhibits only a single function capable of removing radicals during operation of a fuel cell.

For example, International Publication No. WO 2020/226449 A1 published by the present applicant specifically discloses that a radical scavenger includes a porous protective film on the surface of radical trapping particles, and that the porous protective film includes at least one highly oxidatively stable material selected from the group consisting of silica, carbon nitride, heteroatom-doped graphene, porphyrin-based compounds, phenazine-based compounds, and derivatives thereof. However, the porous protective film has been focused only on the technical object of maintaining the lifetime of the fuel cell for a long time by preventing the elution of metal ions derived from radical trapping particles during fuel cell operation, and there was a limitation in that it was impossible to provide a multifunctional radical scavenger. Additionally, the $g$-$C_3N_4$ layer, which is one of the porous protective films, had a limitation in that it was formed in bulk form by heat-treating a precursor solution, and thus the oxygen radical trapping function of the radical scavenger was poor. Additionally, the published international application does not in any way disclose that two or more composite shells coated on the surface of the radical trapping particle include a functional nanosheet.

**[DETAILED DESCRIPTION OF INVENTION]**

**[TECHNICAL PROBLEMS]**

In order to solve the above limitations, an object of the present disclosure is to provide a multifunctional radical scavenger having improved durability and a heat dissipation function through a functional nanosheet layer coated on the surface of the radical scavenger.

Another object of the present disclosure is to provide a multifunctional radical scavenger that improves both chemical durability and heat dissipation performance of a membrane-electrode assembly by forming a protective layer in which two or more functional nanosheet layers are stacked.

Still another object of the present disclosure is to provide a method for manufacturing a multi-functional radical scavenger in which a functional nanosheet layer is easily coated on the surface of the radical scavenger using a resonant acoustic mixer (RAM).

Still another object of the present disclosure is to provide a polymer electrolyte membrane including the multi-functional radical scavenger.

Still another object of the present disclosure is to provide a catalyst layer including the multifunctional radical scavenger.

Still another object of the present disclosure is to provide a membrane-electrode assembly including the polymer electrolyte membrane.

Still another object of the present disclosure is to provide a membrane-electrode assembly including the catalyst layer.

Still another object of the present disclosure is to provide a fuel cell including the membrane-electrode assembly.

The objects of the present disclosure are not limited to the above-mentioned objects, and other objects and advantages of the present disclosure not mentioned above can be understood by the following description and will be more clearly understood by the examples of the present disclosure. Additionally, it will be readily apparent that the objects and advantages of the present disclosure may be realized by means of the instrumentalities and combinations indicated in the claims.

### [TECHNICAL SOLUTION]

An embodiment of the present disclosure for achieving the above objects is to provide a multifunctional radical scavenger, which includes a first radical scavenger; and a functional nanosheet layer coated on the surface of the first radical scavenger, in which the functional nanosheet layer comprises at least two or more layers; and in which the at least two or more layers comprise a functional nanosheet.

### [EFFECT OF INVENTION]

According to one aspect of the present disclosure, it is possible to provide a multifunctional radical scavenger having improved durability and a heat dissipation function. Through such a multifunctional radical scavenger, it is possible to provide a membrane-electrode assembly capable of improving chemical durability and effectively dissipating, to the outside, the heat generated during the operation of a fuel cell to extend the lifetime of the fuel cell.

In addition to the above effects, specific effects of the present disclosure will be described together while describing specific details for carrying out the present disclosure.

### [BRIEF DESCRIPTION OF THE DRAWING]

FIG. 1 is a cross-sectional view of a membrane-electrode assembly according to an embodiment of the present disclosure.

FIG. 2 is a schematic diagram for explaining a fuel cell according to an embodiment of the present disclosure.

FIG. 3 is a TEM image of a multifunctional radical scavenger according to an embodiment of the present disclosure.

FIG. 4 is a TEM image of a multifunctional radical scavenger according to another embodiment of the present disclosure.

FIG. 5 is a TEM image of a multifunctional radical scavenger according to still another embodiment of the present disclosure.

FIG. 6 is a chemical durability evaluation result of a membrane-electrode assembly according to an embodiment of the present disclosure.

### [BEST MODE]

Hereinafter, each configuration of the present disclosure will be described in more detail so that those skilled in the art can easily practice the same, but this is only one example, and the scope of rights of the present disclosure is not limited by the following description.

A multifunctional radical scavenger according to an aspect of the present disclosure includes a first radical scavenger and a functional nanosheet layer coated on a surface of the first radical scavenger. The functional nanosheet layer includes at least two or more layers, and the at least two or more layers include functional nanosheets. According to an aspect of the present disclosure, it is possible to provide a multifunctional radical scavenger having improved durability and a heat dissipation function. Through such a multifunctional radical scavenger, it is possible to provide a membrane-electrode assembly capable of improving chemical durability and effectively dissipating, to the outside, the heat generated during the operation of a fuel cell to extend the lifetime of the fuel cell. According to another aspect of the present disclosure, a functional nanosheet layer having at least two or more multi-layered structures is formed on the surface of the radical scavenger, so that a high voltage retention rate can be exhibited even after a long time, compared to a functional nanosheet layer having a single-layered structure.

Hereinafter, the configuration of the present disclosure will be described in more detail.

**1. Multifunctional radical scavenger and manufacturing method thereof**

The multifunctional radical scavenger according to an embodiment of the present disclosure includes a first radical scavenger. The first radical scavenger may remove oxygen radicals derived from hydrogen peroxide generated during a reduction reaction of oxygen.

The first radical scavenger may be, for example, any one selected from the group consisting of transition metals, transition metal ions, transition metal oxides, transition metal complexes, precious metals, precious metal ions, precious metal oxides, precious metal complexes, and combinations thereof. However, the technical spirit of the present disclosure is not limited thereto, and any particle form capable of trapping oxygen radicals can be applied.

The transition metal may be any one selected from the group consisting of cerium (Ce), manganese (Mn), tungsten (W), cobalt (Co), vanadium (V), nickel (Ni), chromium (Cr), zirconium (Zr), yttrium (Y), iridium (Ir), iron (Fe), titanium (Ti), molybdenum (Mo), lanthanum (La), and neodymium (Nd).

The precious metal may be any one selected from the group consisting of silver (Ag), platinum (Pt), ruthenium (Ru), palladium (Pd), and rhodium (Rh).

The first radical scavenger may have an average diameter of 3 nm to 200 nm, preferably 4 nm to 150 nm, and most preferably 5 nm to 100 nm. When the diameter is smaller than the above diameter, there may be a problem in that the functional nanosheet is not coated on the surface of the radical scavenger and the radical scavenger may be supported on the nanosheet, whereas when the diameter is larger than the above diameter, there may be a problem in that the nanosheet may not fully protect the surface of the radical scavenger.

The multifunctional radical scavenger according to the present disclosure includes a functional nanosheet layer coated on the surface of the first radical scavenger. The functional nanosheet layer includes functional nanosheets.

According to the present disclosure, by being coated on the surface of the first radical scavenger in a two-dimensional nanosheet form rather than a bulk form, not only can the oxygen radical trapping effect of the first radical scavenger be well maintained, but also it can improve the durability of the first radical scavenger.

The functional nanosheet according to the present disclosure may include any one selected from the group consisting of a graphene nanosheet, a graphitic-carbon nitride nanosheet (g-$C_3N_4$ nanosheet), a hexagonal boron nitride nanosheet (h-BN nanosheet), and combinations thereof.

First, a graphene nanosheet has an advantage in that it is a two-dimensional nanosheet manufactured in the form of porous flakes and has a large specific surface area, and thus, it can easily be coated on the surface of the first radical scavenger. Additionally, the graphene nanosheet can improve the durability of the first radical scavenger, and thus prevent the elution of transition metal or precious metal ions from the first radical scavenger. Additionally, graphene nanosheets can contribute to improving performance and durability of fuel cells due to their excellent electrical and thermal conductivity. Therefore, according to the multifunctional radical scavenger according to the present disclosure, the first radical scavenger can easily perform the oxygen radical scavenger function, and the durability of the first radical scavenger is improved, thereby ultimately improving the chemical durability of the membrane-electrode assembly, and performance and durability of a fuel cell.

Next, the graphitic-carbon nitride nanosheet (g-$C_3N_4$ nanosheet) has an advantage in that it is a two-dimensional nanosheet and has a large specific surface area, and thus, can easily be coated on the surface of the first radical scavenger. Additionally, the graphitic-carbon nitride nanosheet can improve the durability of the first radical scavenger, and accordingly, can prevent the elution of transition metal or precious metal ions from the first radical scavenger. Therefore, according to the multifunctional radical scavenger according to the present disclosure, the first radical scavenger can easily perform the oxygen radical scavenger function, and improve the durability of the first radical scavenger, thereby being capable of improving resulting the chemical durability of the membrane-electrode assembly.

Next, the hexagonal boron nitride nanosheet (h-BN nanosheet) has an advantage in that it is a two-dimensional nanosheet and has a large specific surface area, as in the above-described graphitic-carbon nitride nanosheet, and thus, the coating to the surface of the first radical scavenger can easily be performed.

Additionally, the hexagonal boron nitride nanosheet is a heat dissipating material, and when the fuel cell is driven, heat generated in the membrane-electrode assembly can be effectively discharged to the outside, thereby extending the lifetime of the fuel cell. Therefore, according to the multifunctional radical scavenger according to the present disclosure, it is possible to perform a function of emitting heat generated during driving of a fuel cell to the outside while performing the function of trapping oxygen radicals, which is the original function of the first radical scavenger.

The functional nanosheet layer according to the present disclosure may include at least two or more layers. The at least two or more layers may include functional nanosheets.

The at least two or more layers may include a first layer and a second layer disposed on the first layer.

The first layer may include a graphitic-carbon nitride nanosheet ($g-C_3N_4$ nanosheet) or a hexagonal boron nitride nanosheet (h-BN nanosheet).

According to another embodiment of the present disclosure, the first layer may further include a graphene nanosheet, and the graphene nanosheet may be one which is mixed with at least one of the graphitic-carbon nitride nanosheet ($g-C_3N_4$ nanosheet) and the hexagonal boron nitride nanosheet (h-BN nanosheet).

The graphene nanosheet according to the present disclosure has a structure in which carbon atoms gather to form a two-dimensional plane, forming a honeycomb structure. In particular, graphene nanosheets have a very high thermal conductivity higher than diamond by of 5,000 W/mK or more, and have excellent elasticity and do not lose electrical properties even when stretched or bent.

The graphene nanosheet can further improve the durability and heat dissipation function of the multifunctional radical scavenger by mixing with at least one of the graphitic-carbon nitride nanosheet ($g-C_3N_4$ nanosheet nanosheet) and the hexagonal boron nitride nanosheet (h-BN nanosheet).

The second layer may include any one selected from the group consisting of a graphitic-carbonitride nanosheet ($g-C_3N_4$ nanosheet), a graphene nanosheet, a hexagonal boron nitride nanosheet (h-BN nanosheet), and combinations thereof.

The thickness of the first layer may be 0.1 nm to 30 nm, preferably 0.2 nm to 25 nm, and more preferably 0.3 nm to 20 nm. When the thickness of the first layer is less than the above numerical range, the multi-functional purpose of the multifunctional radical scavenger may not be well realized, whereas when the thickness exceeds the above numerical range, after constructing a functional nanosheet layer for multifunctionality, the effect of the first radical scavenger on trapping oxygen radicals may be reduced.

The thickness of the second layer may be 0.1 nm to 30 nm, preferably 0.2 nm to 25 nm, and more preferably 0.3 nm to 20 nm. When the thickness of the second layer is less than the above numerical range, the multifunctional purpose of the multifunctional radical scavenger may not be well realized, whereas when the thickness of the second layer exceeds the above numerical range, the effect of the first radical scavenger on trapping oxygen radicals may be reduced.

The functional nanosheet according to the present disclosure may have a length of 30 nm to 300 nm. The functional nanosheet may have a 1 to 20 layered structure. However, the technical spirit of the present disclosure is not limited thereto, and functional nanosheets having a length exceeding 300 nm may also be applied. However, in this case, it may further require to adjust the amount of functional nanosheets such that 60% or more of the functional nanosheets fall within the above numerical range using a ball mill or planetary stirring including beads.

The functional nanosheet layer according to the present disclosure may be manufactured using a resonant acoustic mixer.

A method for manufacturing a multifunctional radical scavenger according to an embodiment of the present disclosure includes a step (S 1), in which the first radical scavenger and the first functional nanosheet are mixed to prepare a first mixture; a step (S2), in which the first functional nanosheet is coated on the surface of the first radical scavenger by applying a frequency of 55 Hz to 65 Hz to the first mixture in an atmosphere of gravitational acceleration of 50 g to 100 g for 3 to 50 minutes using a resonant acoustic mixer (RAM) to prepare a preliminary multifunctional radical scavenger; and a step (S3), in which a second functional nanosheet is coated on the surface of the preliminary multifunctional radical scavenger using a resonant acoustic mixer.

Specifically, the first functional nanosheet may be the same as or different from the second functional nanosheet. That is, the first functional nanosheet and the second functional nanosheet may each independently include any one selected from the group consisting of a graphene nanosheet, a graphitic-carbon nitride nanosheet ($g-C_3N_4$ nanosheet), a hexagonal boron nitride nanosheet (h-BN nanosheet), and combinations thereof. Conditions for the resonant acoustic mixer in the step (S2) and the step (S3) may be the same as or different from each other.

In the step (S1), the content of the first functional nanosheet may be 20 to 200 parts by weight, preferably 25 to 150 parts by weight, and more preferably 30 parts by weight based on 100 parts by weight of the first radical scavenger to 100 parts by weight. When the content of the first functional nanosheet is out of the above numerical range, the ability of the radical scavenger to trap oxygen radicals may decrease.

According to another embodiment of the present disclosure, a graphene nanosheet may be further added in the step (S1). Specifically, in the step (S2), the graphene nanosheet may be mixed with the first radical scavenger and the first functional nanosheet to form a composite nanosheet. For example, the composite nanosheet may include a nanosheet in which a hexagonal boron nitride nanosheet and a graphene nanosheet are mixed; or a nanosheet in which a graphitic-carbon nitride nanosheet and a graphene nanosheet are mixed.

In order to realize the composite nanosheet, the weight ratio (the graphene nanosheet:the first functional nanosheet) of the graphene nanosheet to the first functional nanosheet may be 1:0.5 to 1:1.5, preferably 1:0.7 to 1 to 1:1.4, and more preferably 1:0.8 to 1:1.3. When the weight ratio of the graphene nanosheets to the first functional nanosheets is out of the above numerical range, the effect of improving the conductivity of the composite nanosheet may decrease.

According to another embodiment of the present disclosure, in the step (S3), a graphene nanosheet may be used alone instead of the second functional nanosheet so that a graphene nanosheet shell can be formed on the outermost surface of the multifunctional radical scavenger. That is, the step (S3) may be replaced with a step of mixing the preliminary multifunctional radical scavenger and the graphene nanosheet using a resonant acoustic mixer.

In the step (S3), the content of the graphene nanosheet may be 30 to 150 parts by weight, preferably 35 to 120 parts by weight, and more preferably 40 to 90 parts by weight based on 100 parts by weight of the preliminary multifunctional radical scavenger

## 2. Polymer electrolyte membrane

Another embodiment of the present disclosure is a polymer electrolyte membrane including the multifunctional radical scavenger described above. The parts described above and repeated descriptions are briefly described or omitted.

The polymer electrolyte membrane according to an embodiment of the present disclosure may be manufactured by coating an ion conductor dispersion containing a multifunctional radical scavenger on a substrate and then drying the same.

A polymer electrolyte membrane according to another embodiment of the present disclosure may include a porous support in which an ion conductor dispersion containing a multifunctional radical scavenger is impregnated.

The ion conductor dispersion according to the present disclosure may include an ion conductor. The content of the multifunctional radical scavenger may be 0.05 to 20 parts by weight, preferably 0.1 to 15 parts by weight, and more preferably 0.3 to 10 parts by weight based on 100 parts by weight of the ion conductor. When the content of the multifunctional radical scavenger exceeds the above numerical range, ionic conductivity may be decreased, whereas when the content is below the above numerical range, chemical durability of the membrane-electrode assembly may not be sufficiently improved.

The ion conductor according to the present disclosure may be any one selected from the group consisting of a fluorine-based ion conductor, a partial fluorine-based ion conductor, and a hydrocarbon-based ion conductor.

The fluorine-based ion conductor may be, for example, as a fluorine-based polymer containing fluorine in the main chain, any one selected from the group consisting of poly(perfluorosulfonic acid), poly(perfluorocarboxylic acid), copolymers of tetrafluoroethylene containing a sulfonic acid group and fluorovinyl ether, and mixtures thereof.

The partial fluorine-based ion conductor may be, for example, a polystyrene-graft-ethylenetetrafluoroethylene copolymer or a polystyrene-graft-polytetrafluoroethylene copolymer.

The hydrocarbon-based ion conductor may be, for example, any one selected from the group consisting of sulfonated polyimide (S-PI), sulfonated polyarylethersulfone (S-PAES), sulfonated polyetheretherketone (S-PEEK), sulfonated polybenzimidazole (S-PBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and a mixture thereof.

The porous support according to the present disclosure may be a fluorine-based support or a nanoweb support.

The fluorine-based support may correspond to, for example, expanded polytetrafluoroethylene (e-PTFE) having a microstructure of polymeric fibrils or a microstructure in which nodes are interconnected by fibrils. Additionally, a film having a microstructure of polymeric fibrils without the nodes may also be used as the porous support.

The fluorine-based support may include a perfluorinated polymer. The porous support may correspond to a more porous and stronger support by extrusion molding of dispersion polymerization PTFE into a tape in the presence of a lubricant and stretching the thus-obtained material.

Additionally, by heat-treating the e-PTFE at a temperature exceeding the melting point (about 342°C) of the PTFE, the non-crystalline content of the PTFE may be increased. The e-PTFE film prepared by the above method may have micropores having various diameters and porosity. The e-PTFE film prepared by the above method may have pores of at least 35%, and the micropores may have a diameter of about 0.01 μm to about 1 μm.

The nanoweb support according to an embodiment of the present disclosure may be a non-woven fibrous web consisting of a plurality of randomly oriented fibers. The non-woven fibrous web refers to a sheet having a structure of individual fibers or filaments that are interlaid, but not in the same way as in a woven fabric. The non-woven fibrous web may be prepared by any one method selected from the group consisting of carding, gameting, air-laying, wet-laying, melt blowing, spunbonding, and stitch bonding.

The fiber may include one or more polymer materials, and generally, any polymer material may be used as long as it is used as such, and specifically, a hydrocarbon-based fiber-forming polymer material may be used. For example, the fiber-forming polymeric materials may include any one selected from the group consisting of polyolefins (e.g., polybutylene, polypropylene, and polyethylene), polyesters (e.g., polyethylene terephthalate and polybutylene terephthalate), polyamides (nylon-6 and nylon-6,6), polyurethane polybutene, polylactic acid, polyvinyl alcohol, polyphenylene sulfide, polysulfone, fluid crystalline polymers, polyethylene-co-vinylacetate, polyacrylonitrile, cyclic polyolefins, polyoxymethylene, polyolefin-based thermoplastic elastomers, and a combination thereof. However, the technical idea of the present disclosure is not limited thereto.

The nanoweb support according to an embodiment of the present disclosure may be a support in which nanofibers are integrated in the form of a non-woven fabric including a plurality of pores.

As the nanofiber, a hydrocarbon-based polymer which exhibits excellent chemical resistance and has hydrophobicity, and thus are not subject to shape deformation by moisture in a high-humidity environment, may preferably be used. Specifically, as the hydrocarbon-based polymer, any one selected from the group consisting of nylon, polyimide, polyaramid, polyetherimide, polyacrylonitrile, polyaniline, polyethylene oxide, polyethylene naphthalate, polybutylene terephthalate, styrene butadiene rubber, polystyrene, polyvinyl chloride, polyvinyl alcohol, polyvinylidene fluoride, polyvinyl butylene, polyurethane, polybenzoxazole, polybenzimidazole, polyamideimide, polyethylene terephthalate, polyphenylene sulfide, polyethylene, polypropylene, a copolymer thereof, and a mixture thereof, and among these, polyimide having more excellent heat resistance, chemical resistance, and shape stability may preferably be used.

The nanoweb support is an aggregate of nanofibers in which nanofibers prepared by electrospinning are randomly arranged. In particular, considering the porosity and thickness of the nanoweb, the nanofibers measured for 50 fiber diameters using a scanning electron microscope (JSM6700F, JEOL) and calculated from the average, it is desirable to have a diameter with an average of 40 nm to 5,000 nm.

When the average diameter of the nanofibers is below the above numerical range, the mechanical strength of the porous support may be reduced, whereas when the average diameter of the nanofibers exceeds the above numerical range, the porosity may be significantly decreased and the thickness may be increased.

The thickness of the non-woven fibrous web may be 10 $\mu$m to 50 $\mu$m, and specifically 15 $\mu$m to 43 $\mu$m. When the thickness of the non-woven fibrous web is below the above numerical range, the mechanical strength may decrease, whereas when the thickness exceeds the above numerical range, resistance loss may increase, and weight reduction and integration may decrease.

The non-woven fibrous web may have a basic weight of 5 $mg/cm^2$ to 30 $mg/cm^2$. When the basis weight of the non-woven fibrous web is below the above range, visible pores are formed, making it difficult to function as a porous support, whereas when the basis weight of the non-woven fibrous web exceeds the above numerical range, it may be prepared in the form of a paper or fabric in which pores are hardly formed.

The porous support according to the present disclosure may have a porosity of 30 % to 90%, and preferably 60 % to 85%. When the porosity of the porous support is below the above numerical range, impregnation property of the ion conductor may deteriorate, whereas when the porosity of the porous support exceeds the above numerical range, shape stability may deteriorate, and thus, subsequent processes may not proceed smoothly.

The porosity may be calculated by the ratio of the air volume in the porous support to the total volume of the porous support according to Equation 1 below. In particular, the total volume may be calculated by preparing a rectangular sample and measuring its width, length, and thickness, and the air volume may be obtained by measuring the mass of the sample and subtracting the polymer volume calculated from the density from the total volume.

[Equation 1]

$$\text{Porosity } (\%) = (\text{air volume in porous support/total volume of porous support}) \times 100$$

**3. Catalyst layer**

Another embodiment of the present disclosure is a catalyst layer including the multifunctional radical scavenger described above. The parts described above and repeated descriptions are briefly described or omitted.

The catalyst layer according to the present disclosure may be prepared by coating an electrode slurry on at least one surface of a polymer electrolyte membrane.

Since the electrode slurry includes the multifunctional radical scavenger according to the present disclosure, chemical durability of the membrane-electrode assembly can be improved and the heat generated during the operation of a fuel cell can be efficiently discharged to the outside.

## 4. Membrane-electrode assembly

Still another embodiment of the present disclosure is a membrane-electrode assembly including the polymer electrolyte membrane.

Still another embodiment of the present disclosure is a membrane-electrode assembly including the catalyst layer.

Still another embodiment of the present disclosure is a membrane-electrode assembly, which includes a polymer electrolyte membrane including a first multifunctional radical scavenger and a catalyst layer including a second multifunctional radical scavenger coated on at least one surface of the polymer electrolyte membrane. The first multifunctional radical scavenger may be the same as or different from the second multifunctional radical scavenger.

According to the present disclosure, it is possible to provide a membrane-electrode assembly, which can improve chemical durability by including a multi-functional radical scavenger, and can extend the lifetime of the fuel cell by effectively discharging the heat generated during the fuel cell operation to the outside.

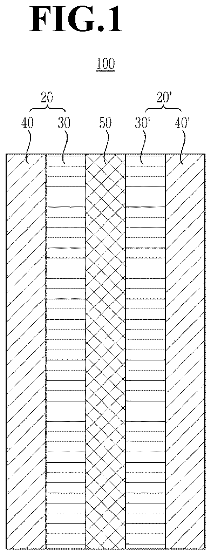

FIG. 1 is a cross-sectional view of a membrane-electrode assembly according to an embodiment of the present disclosure.

Hereinafter, the configuration of the present disclosure will be described in detail with reference to FIG. 1.

The membrane-electrode assembly 100 according to the present disclosure is a membrane-electrode assembly 100 including the polymer electrolyte membrane 50, which includes the anode electrode 20 and the cathode electrode 20' positioned opposite to each other, and the polymer electrolyte membrane 50 positioned between the anode electrode 20 and the cathode electrode 20'.

The anode and cathode electrodes (20, 20') include electrode substrates (40, 40') and the catalyst layers (30, 30') formed on surfaces of the electrode substrates (40, 40'), and the electrode substrates (40, 40') and may further include a microporous layer (not shown) containing conductive fine particles (e.g., carbon powder, carbon black, *etc.*) so as to facilitate diffusion of materials between the catalyst layers (30, 30') and the electrode substrates (40, 40').

The catalyst layers (30, 30') of the anode and cathode electrodes (20, 20') include a catalyst. As the catalyst, any catalyst that participates in the reaction of a battery and can be used as a catalyst for a fuel cell may be used. Preferably, a platinum-based metal may be used.

The platinum-based metal may include any one selected from the group consisting of platinum (Pt), palladium (Pd), ruthenium (Ru), iridium (Ir), osmium (Os), a platinum-M alloy, a non-platinum alloy, and a combination thereof, and more preferably, a combination of two or more metals selected from the platinum-based catalytic metal group may be used, but is not limited thereto, and any platinum-based catalytic metal that can be used in the art may be used without limitation.

The M may correspond to at least one selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh). Specifically, as the platinum alloy, two or more selected from the group consisting of Pt-Pd, Pt-Sn, Pt-Mo, Pt-Cr, Pt-W, Pt-Ru, Pt-Ru-W, Pt-Ru-Mo, Pt-Ru-Rh-Ni, Pt-Ru-Sn-W, Pt-Co, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, and a combination thereof may be used alone or in combination.

Additionally, as the non-platinum alloy, one or a mixture of two or more selected from the group consisting of Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, and a combination thereof may be used.

As the catalyst itself, the catalyst itself (black) may be used or it may be used by supporting the same into a carrier.

## 5. Fuel cell

Still another embodiment of the present disclosure is a fuel cell including the membrane-electrode assembly.

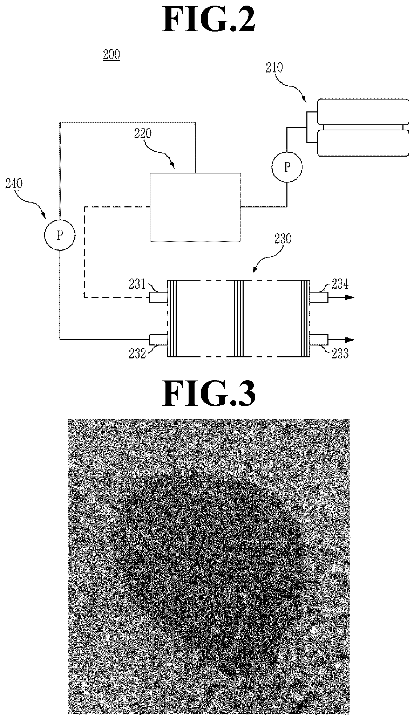

FIG. 2 is a schematic diagram for explaining a fuel cell according to an embodiment of the present disclosure.

Referring to FIG. 2, the fuel cell 200 according to the present disclosure may include a fuel supply unit 210, which supplies a mixed fuel in which fuel and water are mixed; a reforming unit 220, which reforms the mixed fuel to generate reformed gas containing hydrogen gas; a stack 230, in which the reformed gas containing hydrogen gas supplied from the reforming unit 220 causes an electrochemical reaction with an oxidizing agent to generate electrical energy; and an oxidizing agent supply unit 240, which supplies the oxidizing agent to the reforming unit 220 and the stack 230.

The stack 230 may be provided with a plurality of unit cells which generate electrical energy by inducing an oxidation/reduction reaction between a reformed gas including hydrogen gas supplied from the reforming unit 220 and the oxidizing agent supplied from the oxidizing agent supplying unit 240.

Each unit cell, which refers to a unit cell that generates electricity, may include the membrane-electrode assembly for oxidizing/reducing the reformed gas containing hydrogen gas and oxygen in the oxidizing agent, and a separator (also called a bipolar plate, hereinafter referred to as "separator") for supplying a reformed gas containing hydrogen gas and the oxidizing agent to the membrane-electrode assembly. The separators are disposed on both sides of the membrane-electrode assembly with the membrane-electrode assembly placed at the center. In particular, the separators respectively located at the outermost side of the stack are also particularly called end plates.

Among the separators, the end plate may be provided with a pipe-shaped first supply pipe 231 for injecting the reformed gas including hydrogen gas supplied from the reforming unit 220; and a pipe-shaped second supply pipe 232 for injecting oxygen gas; and the other end plate may be provided with a first discharge pipe 233 for discharging reformed gas containing hydrogen gas, that is finally unreacted and remains in a plurality of unit cells, to the outside; and a second discharge pipe 234 for discharging the oxidizing agent, that is finally unreacted and remains in the unit cell, to the outside.

In the fuel cell, since the separator, the fuel supply unit, and the oxidizing agent supply unit constituting the electricity generation unit are used in a conventional fuel cell, a detailed description thereof will be omitted herein.

Hereinafter, embodiments of the present disclosure will be described in detail so that those skilled in the art can easily practice the same, but these are merely exemplary embodiments, and the scope of rights of the present disclosure is not limited thereto.

**[Preparation Example 1: Preparation of radical scavengers]**

Radical scavengers were prepared according to the following Comparative Examples and Examples.

<Comparative Example 1: Conventional $CeO_2$>

$CeO_2$ having an average particle diameter of 50 nm was prepared.

<Comparative Example 2: Radical scavengers in which $g\text{-}C_3N_4$ layer is formed on the surface of $CeO_2$>

After adding 2 parts by weight of $CeO_2$ nanoparticles based on 100 parts by weight of a methylpyrrolidine solvent to a precursor solution containing 3 wt% of dicyandiamide based on the total weight of the methylpyrrolidine solvent, the mixture was stirred at 25°C at 250 rpm for 10 hours. Then, centrifugation was performed at 3,600 rpm and the resultant was dried at 60°C overnight to obtain $CeO_2$ nanoparticles in which a dicyandiamide layer was formed on the surface. The $CeO_2$ nanoparticles in which a dicyandiamide layer was formed on the surface were subjected to heat treatment at 550°C for 4 hours to convert the dicyandiamide layer into a bulk $g\text{-}C_3N_4$ layer to thereby obtain a radical scavenger. The radical scavenger was added in 1.5 M sulfuric acid at 80°C and the mixture was stirred for 3 hours to remove impurities adsorbed on the porous protective film of $g\text{-}C_3N_4$, and the resultant was rinsed with distilled water several times, and dried to finally prepare a radical scavenger in which the $g\text{-}C_3N_4$ layer (bulk) is formed on the surface of $CeO_2$.

<Comparative Example 3: $CeO_x$@h-BN nanosheet>

In a reaction container, 100 parts by weight of $CeO_2$ and 70 parts by weight of a hexagonal boron nitride nanosheet (h-BN nanosheet), which has a length of 200 nm to 300 nm and a 5 to 10 multi-layered structure, were mixed using a resonant acoustic mixer while applying a frequency of 60 Hz in an atmosphere of gravitational acceleration of 80 g for 10 minutes. Finally, a hexagonal boron nitride nanosheet (h-BN nanosheet) layer having a thickness of 9 nm and a single layer structure was formed on the surface of $CeO_2$.

<Example 1: $CeO_x$@h-BN nanosheet @$g\text{-}C_3N_4$ nanosheet>

100 parts by weight of $CeO_2$ and 70 parts by weight of a hexagonal boron nitride nanosheet (h-BN nanosheet), which has a length of 200 nm to 300 nm and a 5 to 10 multi-layered structure, were added to a reaction container. The $CeO_2$ and the hexagonal boron nitride nanosheet (h-BN nanosheet) were mixed using a resonant acoustic mixer while applying a frequency of 60 Hz in an atmosphere of gravitational acceleration of 80 g for 10 minutes. First, a hexagonal boron nitride nanosheet layer was formed on the surface of $CeO_2$ to prepare a preliminary multifunctional radical scavenger ($CeO_2$@h-BN nanosheet). Then, 170 parts by weight of the preliminary multifunctional radical scavenger and 50 parts by weight of the graphitic-carbon nitride nanosheet ($g\text{-}C_3N_4$ nanosheet) were mixed using a resonant acoustic mixer while applying a frequency of 60 Hz in an atmosphere of gravitational acceleration of 80 g for 10 minutes. Finally, the multifunctional radical scavenger ($CeO_2$@h-BN nanosheet @$g\text{-}C_3N_4$ nanosheet) according to Example 1 was prepared.

<Example 2: CeOx@g-C$_3$N$_4$ nanosheet @graphene nanosheet>

A multifunctional radical scavenger was prepared in the same manner as in Example 1, except that a preliminary multifunctional radical scavenger (CeO$_2$@g-C$_3$N$_4$ nanosheet) was prepared using a graphitic-carbon nitride nanosheet (g-C$_3$N$_4$ nanosheet) instead of the hexagonal boron nitride nanosheet (h-BN nanosheet), and the multifunctional radical scavenger (CeO$_2$@g-C$_3$N$_4$ nanosheet @ graphene nanosheet) according to Example 2 was finally prepared using graphene nanosheets (1 to 10 layered) instead of the graphitic-carbon nitride nanosheet.

<Example 3: CeO$_2$@h-BN nanosheet +graphene nanosheet @g-C$_3$N$_4$ nanosheet>

A multifunctional radical scavenger was prepared in the same manner as in Example 1, except that a preliminary multifunctional radical scavenger (CeO$_2$@h-BN nanosheet+graphene nanosheet) was prepared using a mixture, in which the hexagonal boron nitride nanosheet (h-BN nanosheet) and a graphene were mixed in a 1:1 weight ratio, instead of the hexagonal boron nitride nanosheet (h-BN nanosheet). Finally, the multifunctional radical scavenger (CeO$_2$@h-BN+graphene nanosheet @g-C$_3$N$_4$ nanosheet) according to Example 3 was prepared.

**[Preparation Example 2: Preparation of membrane-electrode assembly]**

A membrane-electrode assembly including the radical scavenger according to Preparation Example 1 was prepared as follows. The membrane-electrode assembly was prepared by a conventional method.

**<Comparative Example 1>**

10 g of a commercially available Pt/C catalyst from Tanaka was added into a reaction container and wetted with a solvent to prepare a synthetic catalyst solution. Into the synthetic catalyst solution, 3.5 parts by weight of the radical scavenger according to Comparative Example 1 based on 100 parts by weight of the catalyst were added, and the mixture was dispersed using a high-pressure disperser to prepare an electrode slurry. The electrode slurry was directly coated on one surface of a polymer electrolyte membrane (product name: Nafion D-520) to prepare a membrane-electrode assembly.

**<Comparative Example 2>**

A membrane-electrode assembly was prepared in the same manner as in Comparative Example 1, except that the radical scavenger according to Comparative Example 2 was used instead of the radical scavenger according to Comparative Example 1.

**<Comparative Example 3>**

A membrane-electrode assembly was prepared in the same manner as in Comparative Example 1, except that the radical scavenger according to Comparative Example 3 was used instead of the radical scavenger according to Comparative Example 1.

**<Example 1>**

A membrane-electrode assembly was prepared in the same manner as in Comparative Example 1, except that the multifunctional radical scavenger according to Example 1 was used instead of the radical scavenger according to Comparative Example 1.

**<Example 2>**

A membrane-electrode assembly was prepared in the same manner as in Comparative Example 1, except that the multifunctional radical scavenger according to Example 2 was used instead of the radical scavenger according to Comparative Example 1.

**<Example 3>**

A membrane-electrode assembly was prepared in the same manner as in Comparative Example 1, except that the multifunctional radical scavenger according to Example 3 was used instead of the radical scavenger according to Comparative Example 1.

[Experimental Example 1: TEM image of Example 1 (CeO$_2$@h-BN nanosheet @g-C$_3$N$_4$ nanosheet)]

FIG. 3 is a transmission electron microscope (TEM) image of a multifunctional radical scavenger according to an embodiment of the present disclosure.
Referring to FIG. 3, it can be seen that the multifunctional radical scavenger according to Example 1 includes a complex shell on the surface of CeO$_2$.

[Experimental Example 2: TEM image of Example 2 (CeO$_2$@g-C$_3$N$_4$ nanosheet @ graphene nanosheet)]

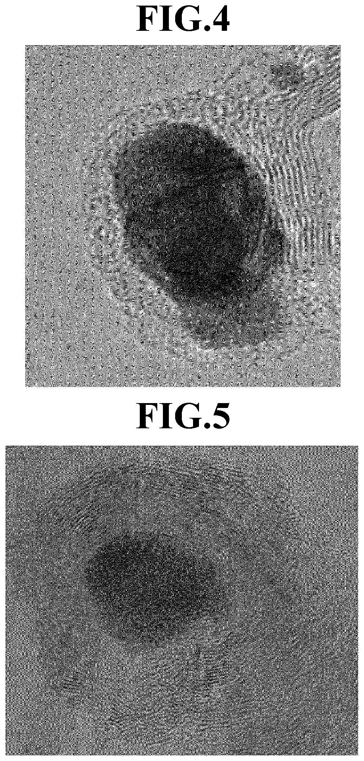

FIG. 4 is a TEM image of a multifunctional radical scavenger according to another embodiment of the present disclosure.
Referring to FIG. 4, it can be seen that the multifunctional radical scavenger according to Example 2 includes a complex shell on the surface of CeO$_2$.

[Experimental Example 3: TEM image of Example 3 (CeO$_2$@h-BN nanosheet+graphene nanosheet@g-C$_3$N$_4$ nanosheet)]

FIG. 5 is a TEM image of a multifunctional radical scavenger according to still another embodiment of the present disclosure.
Referring to FIG. 5, it can be seen that the multifunctional radical scavenger according to Example 3 includes a complex shell on the surface of CeO$_2$.

[Experimental Example 4: Evaluation of chemical durability of membrane-electrode assembly]

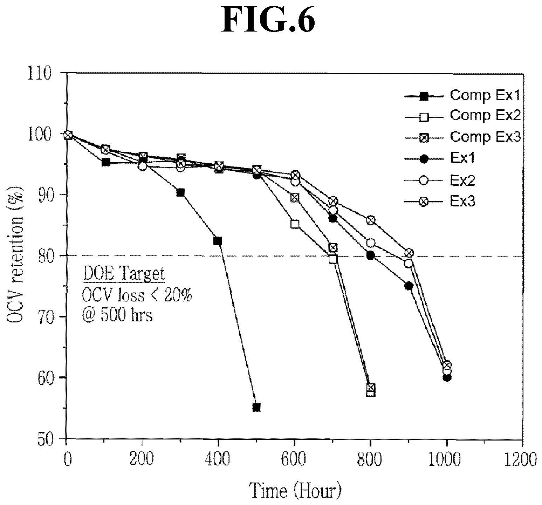

FIG. 6 is a chemical durability evaluation result of a membrane-electrode assembly according to an embodiment of the present disclosure.
The chemical durability of the membrane-electrode assembly according to Preparation Example 2 was evaluated based on the durability evaluation protocol (80°C, OCV loss<20%) of the U.S. Department of Energy (DOE). Specifically, in order to evaluate the chemical durability of the membrane-electrode assembly, an OCV hold method was performed to measure each of the voltage retention rates, and the measured values are shown in FIG. 6.
Referring to FIG. 6, Examples 1 to 3 show a high voltage retention rate even after a long period of time compared to Comparative Examples 1 to 3, and thus, it can be inferred that chemical durability was remarkably improved.
Meanwhile, comparing Comparative Example 3 and Example 1 from the aspect of the structure of the functional nanosheet layer, it can be seen that a high voltage retention rate is exhibited even after the lapse of a long time by forming a functional nanosheet layer having a multi-layered structure of two or more layers on the surface of the radical scavenger compared to a functional nanosheet layer having a single-layered structure. Through this, it can be inferred that chemical durability is significantly improved when the functional nanosheet layer has a multi-layer structure having a two or more layered structure.
Although the preferred embodiments of the present disclosure have been described in detail above, the scope of the present disclosure is not limited thereto, and various modifications and improvements of those skilled in the art using the basic concept of the present disclosure defined in the following claims also fall within the scope of rights of the invention.

**Claims**

1.  A multifunctional radical scavenger comprising:

    a first radical scavenger; and
    a functional nanosheet layer coated on the surface of the first radical scavenger,
    wherein the functional nanosheet layer comprises at least two or more layers; and
    wherein the at least two or more layers comprise a functional nanosheet.

2.  The multifunctional radical scavenger of claim 1, wherein the first radical scavenger is any one selected from the group consisting of transition metals, transition metal ions, transition metal oxides, transition metal complexes, precious metals, precious metal ions, precious metal oxides, precious metal complexes, and combinations thereof.

3. The multifunctional radical scavenger of claim 2, wherein the transition metal is any one selected from the group consisting of cerium (Ce), manganese (Mn), tungsten (W), cobalt (Co), vanadium (V), nickel (Ni), chromium (Cr), zirconium (Zr), yttrium (Y), iridium (Ir), iron (Fe), titanium (Ti), molybdenum (Mo), lanthanum (La), and neodymium (Nd).

4. The multifunctional radical scavenger of claim 2, wherein the precious metal is any one selected from the group consisting of silver (Ag), platinum (Pt), ruthenium (Ru), palladium (Pd), and rhodium (Rh).

5. The multifunctional radical scavenger of claim 1, wherein the functional nanosheet comprises any one selected from the group consisting of a graphene nanosheet, a graphitic-carbon nitride nanosheet (g-$C_3N_4$ nanosheet), a hexagonal boron nitride nanosheet (h-BN nanosheet), and combinations thereof.

6. The multifunctional radical scavenger of claim 1, wherein the at least two or more layers comprise:

   a first layer; and
   a second layer disposed on the first layer.

7. The multifunctional radical scavenger of claim 6, wherein the first layer comprises a graphitic-containing carbon nitride nanosheet (g-$C_3N_4$ nanosheet) or a hexagonal boron nitride nanosheet (h-BN nanosheet).

8. The multifunctional radical scavenger of claim 7, wherein the first layer further comprises a graphene nanosheet, and wherein the graphene nanosheet is mixed with at least one of the graphitic-carbon nitride nanosheet (g-$C_3N_4$ nanosheet) and the hexagonal boron nitride nanosheet (h-BN nanosheet).

9. The multifunctional radical scavenger of claim 6, wherein the second layer comprises any one selected from the group consisting of a graphitic-carbon nitride nanosheet (g-$C_3N_4$ nanosheet), a graphene nanosheet, a hexagonal boron nitride nanosheet (h-BN nanosheet), and combinations thereof.

10. The multifunctional radical scavenger of claim 6, wherein the thickness of the first layer is 0.1 nm to 30 nm and the thickness of the second layer is 0.1 nm to 30 nm.

11. The multifunctional radical scavenger of claim 1, wherein the functional nanosheet has a length of 30 nm to 300 nm.

12. The multifunctional radical scavenger of claim 1, wherein the functional nanosheet layer is prepared using a resonant acoustic mixer.

13. A polymer electrolyte membrane comprising the multifunctional radical scavenger according to claim 1.

14. A catalyst layer comprising the multifunctional radical scavenger according to claim 1.

15. A membrane-electrode assembly comprising the polymer electrolyte membrane according to claim 13.

16. A membrane-electrode assembly comprising the catalyst layer according to claim 14.

17. A fuel cell comprising the membrane-electrode assembly according to claim 15 or 16.

# FIG.1

# FIG.2

# FIG.3

## FIG.4

## FIG.5

# FIG.6

## INTERNATIONAL SEARCH REPORT

| International application No. |
|---|
| **PCT/KR2022/018634** |

**A.    CLASSIFICATION OF SUBJECT MATTER**

**H01M 8/1051**(2016.01)i; **H01M 4/86**(2006.01)i; **H01M 8/1004**(2016.01)i; **H01M 8/10**(2006.01)i

According to International Patent Classification (IPC) or to both national classification and IPC

**B.    FIELDS SEARCHED**

Minimum documentation searched (classification system followed by classification symbols)

H01M 8/1051(2016.01); B01J 20/02(2006.01); B01J 20/20(2006.01); B01J 35/08(2006.01); H01M 4/86(2006.01); H01M 4/96(2006.01); H01M 8/1004(2016.01); H01M 8/1018(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 라디칼 스캐빈저(radical scavenger), 나노시트(nanosheet), 코팅(coating), 그래핀 나노시트(graphene nanosheet), 그래피틱-카본나이트라이드 나노시트(g-C3N4 nanosheet), 육방정 질화붕소 나노시트(h-BN nanosheet)

**C.    DOCUMENTS CONSIDERED TO BE RELEVANT**

| Category* | Citation of document, with indication, where appropriate, of the relevant passages | Relevant to claim No. |
|---|---|---|
| DY | WO 2020-226449 A1 (KOLON INDUSTRIES INC. et al.) 12 November 2020 (2020-11-12) <br> See abstract; claims 1-2 and 16; and paragraphs [0022], [0053]-[0054], [0082] and [0085]. | 1-17 |
| Y | KR 10-1435945 B1 (SAMSUNG ELECTRONICS CO., LTD.) 01 September 2014 (2014-09-01) <br> See claims 1 and 5-6; paragraphs [0018], [0025] and [0027]; and figure 1. | 1-17 |
| Y | AN, W. et al. The Z-scheme Ag2CO3@g-C3N4 core-shell structure for increased photoinduced charge separation and stable photocatalytic degradation. Applied Surface Science. 2020, vol. 504, pp. 1-10. <br> See abstract; and page 7. | 1-17 |
| A | KR 10-2019-0037674 A (KOLON INDUSTRIES, INC. et al.) 08 April 2019 (2019-04-08) <br> See entire document. | 1-17 |
| A | JP 2015-511876 A (STUDIENGESELLSCHAFT KOHLE MBH) 23 April 2015 (2015-04-23) <br> See entire document. | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 March 2023** | **17 March 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2022/018634**

| Patent document cited in search report | | | Publication date (day/month/year) | Patent family member(s) | | | Publication date (day/month/year) |
|---|---|---|---|---|---|---|---|
| WO | 2020-226449 | A1 | 12 November 2020 | CN | 113795959 | A | 14 December 2021 |
| | | | | EP | 3968421 | A1 | 16 March 2022 |
| | | | | JP | 2022-527700 | A | 03 June 2022 |
| | | | | KR | 10-2020-0130179 | A | 18 November 2020 |
| | | | | KR | 10-2436377 | B1 | 25 August 2022 |
| | | | | TW | 202103362 | A | 16 January 2021 |
| | | | | TW | I773988 | B | 11 August 2022 |
| | | | | US | 2022-0209271 | A1 | 30 June 2022 |
| KR | 10-1435945 | B1 | 01 September 2014 | KR | 10-2010-0005527 | A | 15 January 2010 |
| KR | 10-2019-0037674 | A | 08 April 2019 | CN | 111164810 | A | 15 May 2020 |
| | | | | CN | 111164810 | B | 20 September 2022 |
| | | | | EP | 3691006 | A2 | 05 August 2020 |
| | | | | JP | 2020-533756 | A | 19 November 2020 |
| | | | | JP | 6957744 | B2 | 02 November 2021 |
| | | | | KR | 10-2339036 | B1 | 13 December 2021 |
| | | | | US | 2020-0280074 | A1 | 03 September 2020 |
| | | | | WO | 2019-066534 | A2 | 04 April 2019 |
| | | | | WO | 2019-066534 | A3 | 23 May 2019 |
| JP | 2015-511876 | A | 23 April 2015 | CA | 2861412 | A1 | 15 August 2013 |
| | | | | CA | 2861412 | C | 09 February 2021 |
| | | | | CA | 2861448 | A1 | 15 August 2013 |
| | | | | CA | 2861448 | C | 16 February 2021 |
| | | | | CN | 101736487 | A | 16 June 2010 |
| | | | | CN | 101736487 | B | 11 May 2011 |
| | | | | CN | 104093482 | A | 08 October 2014 |
| | | | | CN | 104093482 | B | 26 April 2017 |
| | | | | CN | 104159666 | A | 19 November 2014 |
| | | | | CN | 104159666 | B | 22 February 2017 |
| | | | | CN | 203736405 | U | 30 July 2014 |
| | | | | EP | 2626131 | A1 | 14 August 2013 |
| | | | | EP | 2812110 | A1 | 17 December 2014 |
| | | | | EP | 2812114 | A1 | 17 December 2014 |
| | | | | JP | 2015-513449 | A | 14 May 2015 |
| | | | | JP | 6305348 | B2 | 04 April 2018 |
| | | | | JP | 6305349 | B2 | 04 April 2018 |
| | | | | KR | 10-2014-0126330 | A | 30 October 2014 |
| | | | | KR | 10-2014-0133824 | A | 20 November 2014 |
| | | | | KR | 10-2117722 | B1 | 01 June 2020 |
| | | | | KR | 10-2144419 | B1 | 13 August 2020 |
| | | | | US | 2015-0017555 | A1 | 15 January 2015 |
| | | | | US | 2015-0050583 | A1 | 19 February 2015 |
| | | | | US | 9755247 | B2 | 05 September 2017 |
| | | | | US | 9755248 | B2 | 05 September 2017 |
| | | | | WO | 2013-117192 | A1 | 15 August 2013 |
| | | | | WO | 2013-117725 | A1 | 15 August 2013 |

Form PCT/ISA/210 (patent family annex) (July 2022)

**EP 4 428 965 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020226449 A1